# EUROPÄISCHE PATENTANMELDUNG

(11) **EP 0 560 749 A1**
(43) Veröffentlichungstag der Anmeldung: **15.09.1993**
(21) Anmeldenummer: 93890025.5
(22) Anmeldetag: 25.02.1993
(51) Int. Cl.: F16L 23/14, F24F 13/02

(54) **Lüftungskanal mit rechteckigem Querschnitt**

(30) Priorität: 28.02.1992 AT 376/92
(71) Anmelder: HESONWERK LUFT- UND WASSERTECHNIK LAGEREINRICHTUNGEN GESELLSCHAFT m.b.H., A-4655 Vorchdorf (AT)
(72) Erfinder: Milkovics, Johann, A-4655 Vorchdorf (AT)
(74) Vertreter: Hübscher, Heiner, Dipl.-Ing.

(57) **Zusammenfassung**

Es wird ein Lüftungskanal aus einzelnen über Stoßflansche (2) miteinander verbindbaren Kanalabschnitten mit rechteckigem Querschnitt beschrieben, wobei die Stoßflansche (2) aus einem entsprechend der Seitenlänge der Kanalwände (1) abgelängten, winkelförmigen Kunststoffprofil (3) mit einem Flanschschenkel (4) und einem doppelwandigen Befestigungsschenkel (5) bestehen, der den stirnseitigen Rand der jeweiligen Kanalwand (1) zwischen den beiden Schenkelwänden (5a) aufnimmt und über diese Schenkelwände (5a) mit der ebenfalls aus Kunststoff bestehenden Kanalwand (1) verschweißt ist. Dieser Lüftungskanal ist dadurch gekennzeichnet, daß wenigstens eine der beiden Schenkelwände (5a) des Befestigungsschenkels (5) des Kunststoffprofils (3) für die Stoßflansche (2) auf der der Kanalwand (1) zugekehrten Innenseite wenigstens eine in Profillängsrichtung verlaufende Schweißrippe (9) aufweist und daß die Kanalabschnitte vorzugsweise Versteifungen (10) tragen, die aus Metallprofilen (11) und aus die Metallprofile (11) in Aufnahmeöffnungen (12, 16) aufnehmenden, mit den Kanalwänden (1) verschweißbaren Halterungen (11a) aus Kunststoff zusammengesetzt sind.

## Beschreibung

Die Erfindung bezieht sich auf einen Lüftungskanal aus einzelnen über Stoßflansche miteinander verbindbaren Kanalabschnitten mit rechteckigem Querschnitt, wobei die Stoßflansche aus einem entsprechend der Seitenlänge der Kanalwände abgelängten, winkelförmigen Kunststoffprofil mit einem Flanschschenkel und einem doppelwandigen Befestigungsschenkel bestehen, der den stirnseitigen Rand der jeweiligen Kanalwand zwischen den beiden Schenkelwänden aufnimmt und über diese Schenkelwände mit der ebenfalls aus Kunststoff bestehenden Kanalwand verschweißt ist.

Lüftungskanäle werden im allgemeinen aus Blechen hergestellt, die entsprechend den jeweiligen Konstruktionsvorschriften gekantet werden können und den Belastungsanforderungen hinsichtlich der Druckverhältnisse in den Kanälen genügen. Um die Vorteile von Lüftungskanälen aus Kunststoff ausnützen zu können, ohne die Nachteile solcher Kunststoffkanäle bezüglich der Ausführung unterschiedlicher Konstruktionsvorschriften in Kauf nehmen zu müssen, ist es bekannt (DE-A-38 18 582), die Stoßflansche für die zu verbindenden Kanalabschnitte aus einem winkelförmigen Kunststoffprofil zu bilden, das einen Flanschschenkel und einen doppelwandigen Befestigungsschenkel aufweist, mit dem es auf den stirnseitigen Rand der jeweiligen Kanalwand aufgesteckt wird, nachdem es entsprechend der jeweiligen Seitenlänge der Kanalwand abgelängt wurde. Zur dichten Verbindung dieses Stoßflansches mit der Kanalwand wird die äußere Schenkelwand des doppelwandigen Befestigungsschenkels durch eine Kehlnaht mit der anliegenden Kanalwand verschweißt. Nachteilig bei dieser bekannten Konstruktion ist vor allem, daß die Kehlnaht zwischen dem doppelwandigen Befestigungsschenkel des Stoßflansches und der Kanalwand nur vergleichsweise aufwendig mit der notwendigen Dichtheit hergestellt werden kann und daß insbesondere bei größeren Abmessungen der Kanalabschnitte die Kanalwände aus Kunststoff höheren Belastungsanforderungen nicht ohne weiteres genügen können.

Der Erfindung liegt somit die Aufgabe zugrunde, einen Lüftungskanal der eingangs geschilderten Art so zu verbessern, daß einerseits mit einfachen Mitteln eine vorteilhafte Schweißverbindung zwischen dem doppelwandigen Befestigungsschenkel der Stoßflansche und der anliegenden Kanalwand hergestellt und anderseits den jeweiligen Belastungsanforderungen bezüglich von Über- und Unterdrücken im Lüftungskanal entsprochen werden kann.

Die Erfindung löst die gestellte Aufgabe dadurch, daß wenigstens eine der beiden Schenkelwände des Befestigungsschenkels des Kunststoffprofils für die Stoßflansche auf der der Kanalwand zugekehrten Innenseite wenigstens eine in Profillängsrichtung verlaufende Schweißrippe aufweist und daß die Kanalabschnitte vorzugsweise Versteifungen tragen, die aus Metallprofilen und aus die Metallprofile in Aufnahmeöffnungen aufnehmenden, mit den Kanalwänden verschweißbaren Halterungen aus Kunststoff bestehen.

Durch die in Profillängsrichtung verlaufenden Schweißrippen auf der der Kanalwand zugekehrten Innenseite wenigstens einer der beiden Schenkelwände des Befestigungsschenkels des Stoßflansches werden besonders vorteilhafte Schweißbedingungen insbesondere bei der Anwendung eines Ultraschall-Schweißgerätes sichergestellt, weil über diese Schweißrippen der Schweißvorgang rasch und sicher eingeleitet wird. Es können daher die Vorteile von Kunststoffkanälen voll ausgenützt werden, zumal die zu erwartenden Belastungen über im Bedarfsfall vorzusehende Versteifungen aufgenommen werden können, ohne die Dicke der Kanalwände auf die Einsatzverhältnisse abstimmen zu müssen. Die Abmessungen dieser Versteifungen können ebenfalls durch ein belängen der Metallprofile frei gewählt werden, die lediglich in entsprechende Aufnahmeöffnungen von Halterungen aus Kunststoff eingeführt zu werden brauchen. Die Verbindung zwischen den Halterungen und den Kanalwänden ist durch ein Schweißen einfach herzustellen.

Damit die Schweißrippen der Befestigungsschenkel der Stoßflansche für den Schweißvorgang gut an die anliegende Kanalwand angedrückt werden können, kann in weiterer Ausbildung der Erfindung eine der beiden Schenkelwände des Befestigungsschenkels des Kunststoffprofils für die Stoßflansche wenigstens eine Schweißrippe aufweisen, während die andere Schenkelwand vor dieser Schweißrippe endet, so daß die Kanalwand und die die Schweißrippe tragende Schenkelwand unmittelbar gegeneinander gedrückt werden können. Bei gleich breiten Schenkelwänden müßte ja die Kanalwand zwischen den beiden Schenkelwänden des doppelwandigen Befestigungsschenkels geklemmt werden. Besonders vorteilhafte Schweißbedingungen ergeben sich in diesem Zusammenhang, wenn die äußere Schenkelwand die Schweißrippe aufweist und die innere Schenkelwand entsprechend schmäler ausgebildet ist.

Die Versteifungen für die einzelnen Kanalabschnitte können entsprechend den jeweiligen Belastungsanforderungen gewählt werden. Demgemäß ist es für Sonderfälle möglich, die Metallprofile der Versteifung in Kanallängsrichtung vorzusehen. Im allgemeinen werden jedoch besonders günstige Konstruktionsverhältnisse erzielt, wenn die Versteifung für die Kanalabschnitte aus die Kanalabschnitte umschließenden Versteifungsrahmen besteht, die aus durch die Metallprofile gebildeten Rahmenschenkeln und aus diese Rahmenschenkel in Einstecköffnungen aufnehmenden, mit den Kanalwänden verschweißbaren Eckverbindern als Halterungen zusammengesetzt sind. Die Rahmenschenkel können wiederum durch ein Ablängen des Metallprofils an die Seitenlänge der zugehörigen Kanalwand angepaßt werden, so daß die abgelängten Rahmenschenkellediglich stirnseitig in die Einstecköffnungen der zugehörigen Eckverbinder einzuführen sind, bevor die Eckverbinder an den Kanalwänden angeschweißt werden. Die endseitig in den Eckverbindern aufgenommenen, metallischen Rahmenschenkel werden über die Kanalwände auf Biegung beansprucht. Um eine zusätzliche Versteifung zu erhalten, kann zwischen den Eckverbindern wenigstens ein mit der Kanalwand verschweißbarer eine Durchstecköffnung für den Rahmenschenkel aufweisender, hülsenartiger Halter aus Kunststoff vorgesehen sein, der vor allem dann eingesetzt werden wird, wenn aufgrund von Unterdrücken im Lüftungskanal mit Einbeulungen der Kanalwand zu rechnen ist. Je nach der zu erwartenden Belastung wird die Anzahl der Halter gewählt, die aufgrund der Hülsenform von einem entsprechenden Hülsenprofil abgeschnitten werden können.

Reicht die Belastbarkeit des Kunststoffprofils der Stoßflansche für die zu erwartenden Kanalbelastungen nicht aus, so kann das Kunststoffprofil für die Stoßflansche in seinem Flanschschenkel wenigstens einen in Profillängsrichtung durchgehenden Hohlraum zur Aufnahme einer Versteifung aufweisen, über die die Biegesteifigkeit des Kunststoffprofils nach Bedarf erheblich vergrößert werden kann. Im Bereich der Stoßflansche nimmt das abgewinkelte Kunststoffprofil die Belastungen der Kanalwände auf.

Zur Verbindung der abgelängten Kunststoffprofilstücke jedes Stoßflansches können die Profilstücke auf Gehrung geschnitten und miteinander verschweißt werden. Eine andere besonders vorteilhafte Möglichkeit besteht darin, die abgelängten Kunststoffprofilstücke jedes Stoßflansches durch Eckverbinder aus Kunststoff miteinander zu verschweißen, die in den Hohlraum bzw. die Hohlräume des Flanschschenkels des Kunststoffprofils einführbare Steckansätze aufweisen, was eine formschlüssige Verbindung quer zur Profillängsrichtung sicherstellt.

Damit für die Schweißverbindungen zwischen den Halterungen für das Metallprofil der Versteifungen und den Kanalwänden ähnlich vorteilhafte Verhältnisse wie für das Anschweißen der Stoßflansche erreicht werden können, können die Halterungen für die Metallprofile der Versteifungen mit Anschlußflanschen versehen sein, die auf der der Kanalwand zugekehrten Seite wenigstens eine Schweißrippe tragen.

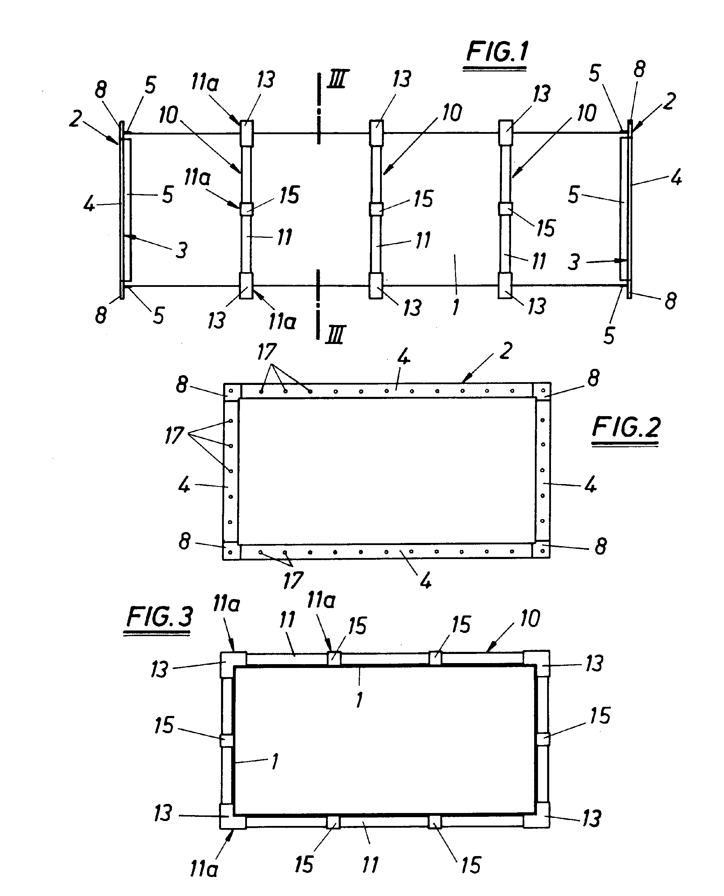

In der Zeichnung ist der Erfindungsgegenstand beispielsweise dargestellt. Es zeigen
Fig. 1 einen Kanalabschnitt eines erfindungsgemäßen Lüftungskanales in einer vereinfachten Seitenansicht,
Fig. 2 diesen Kanalabschnitt in einer Stirnansicht,
Fig. 3 einen Schnitt nach der Linie 111-111 der Fig. 1,
Fig. 4 einen Eckverbinder für die abgelängten Kunststoffprofilstücke eines Stoßflansches in einer Seitenansicht in einem größeren Maßstab,
Fig. 5 diesen Eckverbinder in einer Draufsicht,
Fig. 6 ein Kunststoffprofil für die Stoßflansche in einer stirnseitigen Ansicht in einem größeren Maßstab,
Fig. 7 einen Versteifungsrahmen für einen erfindungsgemäßen Lüftungskanal ausschnittsweise in einem Längsschnitt in einem größeren Maßstab,
Fig. 8 einen Eckverbinder für die Rahmenschenkel des Versteifungsrahmens in einer Ansicht in Richtung des Pfeiles VIII-VIII der Fig. 7 und
Fig. 9 eine stirnseitige Ansicht einer Zwischenhalterung für die Rahmenschenkel des Versteifungsrahmens in einem größeren Maßstab.

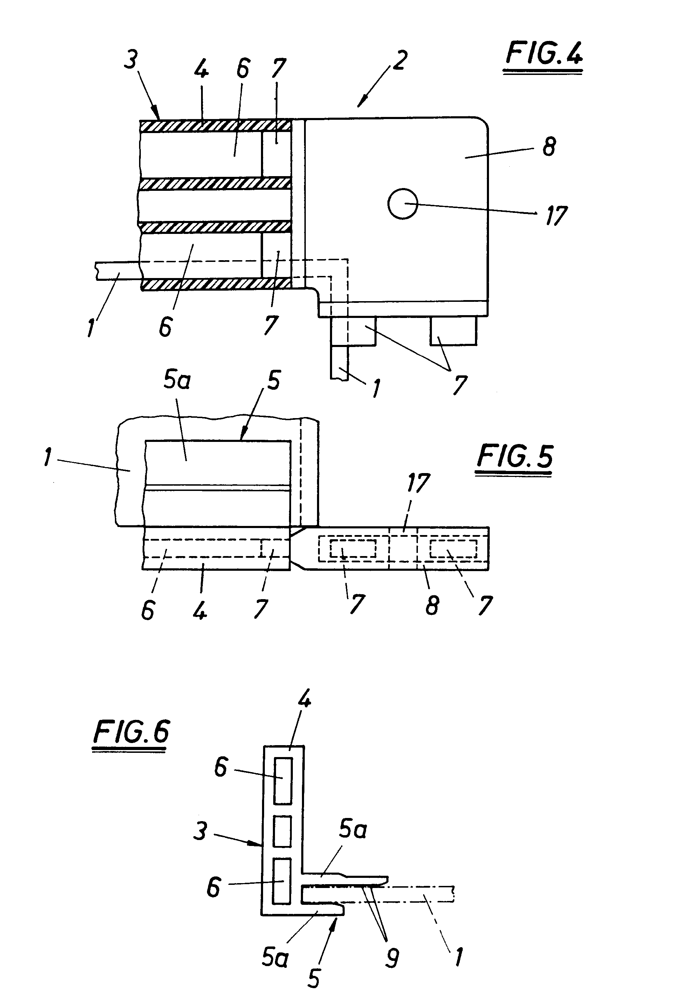

Der dargestellte Kanalabschnitt eines erfindungsgemäßen Lüftungskanales weist Kanalwände 1 aus rechteckigen Kunststoffplatten, beispielsweise aus Polypropylen, auf, die miteinander in üblicher Weise verschweißt sind und stirnseitig einen umlaufenden Stoßflansch 2 tragen. Dieser Stoßflansch 2 besteht aus einem winkelförmigen Kunststoffprofil 3, das gemäß der Fig. 6 einen Flanschschenkel 4 und einen doppelwandigen Befestigungsschenkel 5 bildet, wobei der stirnseitige Rand der Kanalwände 1 zwischen die beiden Schenkelwände 5a eingreift, wie dies strichpunktiert angedeutet ist. Im Flanschschenkel 4 sind in Profillängsrichtung durchgehende Hohlräume 6 vorgesehen, in die bei Bedarf ein Metallprofil als Versteifung für den Stoßflansch 2 eingeschoben werden kann. Diese Hohlräume 6 dienen außerdem zur Aufnahme von Steckansätzen 7, die an Eckverbindern 8 für die abgelängten Kunststoffprofile 3 vorgesehen sind. Um die Kunststoffprofile 3 vorteilhaft mit Hilfe von Ultraschall-Schweißgeräten an den Kanalwänden 1 anschweißen zu können, weist die äußere der beiden Schenkelwände 5a des Befestigungsschenkels 5 zwei Schweißrippen 9 auf, über die der Abschmelzvorgang in besonders vorteilhafter Weise eingeleitet werden kann. Die Eckverbinder 8 können mit den Kunststoffprofilen 3 mit Hilfe von Heißluft unter Verwendung eines Kunststoff-Schweißdrahtes verschweißt werden.

In Abhängigkeit von der Länge der einzelnen Kanalabschnitte und den zu erwartenden Belastungen des Lüftungskanales können die einzelnen Kanalabschnitte mit zusätzlichen Versteifungen 10 ausgerüstet werden. Diese Versteifungen 10 bestehen aus einem Metallprofil 11 und Halterungen 11a, die das Metallprofil 11 in entsprechenden Aufnahmeöffnungen formschlüssig aufnehmen. In besonderen Fällen können diese Versteifungen in Kanallängsrichtung verlaufen. Im allgemeinen bilden die Versteifungen 10 jedoch Versteifungsrahmen, die die Kanalabschnitte umschließen, wie dies auch im Ausführungsbeispiel dargestellt ist. Die entsprechend der Seitenlänge der Kanalwände 1 abgelängten Metallprofile 11 bilden dabei die Rahmenschenkel, die stirnseitig in Einstecköffnungen 12 von Eckverbindern 13 eingreifen. Diese Eckverbinder 13 bilden die Halterungen 11a und sind aus Kunststoff gefertigt, um sie mit den Kanalwänden 1 verschweißen zu können. Zu diesem Zweck sind die Halterungen 11a mit Anschlußflanschen 14 versehen, die auf ihrer der Kanalwand 1 zugekehrten Anschlußfläche wiederum Schweißrippen 9 aufweisen. Zwischen den Eckverbindern 13 der Versteifungsrahmen können bei Bedarf zusätzliche Halterungen 11a in Form von hülsenförmigen Haltern 15 aus Kunststoff vorgesehen sein, die mit den Kanalwänden 1 verschweißt sind und zu diesem ZweckAnschlußflansche 14 bilden. Die Rahmenschenkel aus den Metallprofilen 11 durchsetzen die Halter 15 in Durchstecköffnungen 16. Über die Halter 15 werden die Kanalwände 1 zwischen den Eckverbindern 13 mit den Rahmenschenkeln verbunden, so daß sich eine entsprechende Zwischenabstützung für die Kanalwände 1 an der Versteifung 10 ergibt.

Da sowohl die Länge der Kunststoffprofile 3 als auch der Metallprofile 11 durch einen Ablängvorgang an die jeweilige Seitenlänge der Kanalwand 1 angepaßt werden kann, müssen durch die erfindungsgemäße Konstruktion keine Einschränkungen hinsichtlich der Kanalabmessungen durch vorgegebene Konstruktionsteile in Kauf genommen werden. Die Stoßflansche 2, die über die Eckverbinder 8 in üblicher Weise mit Durchtrittslöchern 17 für die Verbindungsschrauben versehen sind, werden nach ihrer Ablängung auf die stirnseitigen Ränder der Kanalwände 1 aufgesteckt, über die Eckverbinder miteinander verbunden und an den Kanalwänden 1 angeschweißt. Da gemäß der Fig. 6 die innere Schenkelwand 5a des doppelwandigen Befestigungsschenkels 5 schmäler als die äußere Schenkelwand 5a ausgebildet ist, die die Schweißrippen 9 trägt, kann die äußere Schenkelwand 5a mit den Schweißrippen 9 durch einen zangenartigen Klemmschluß unmittelbar an die Kanalwand 1 angedrückt werden.

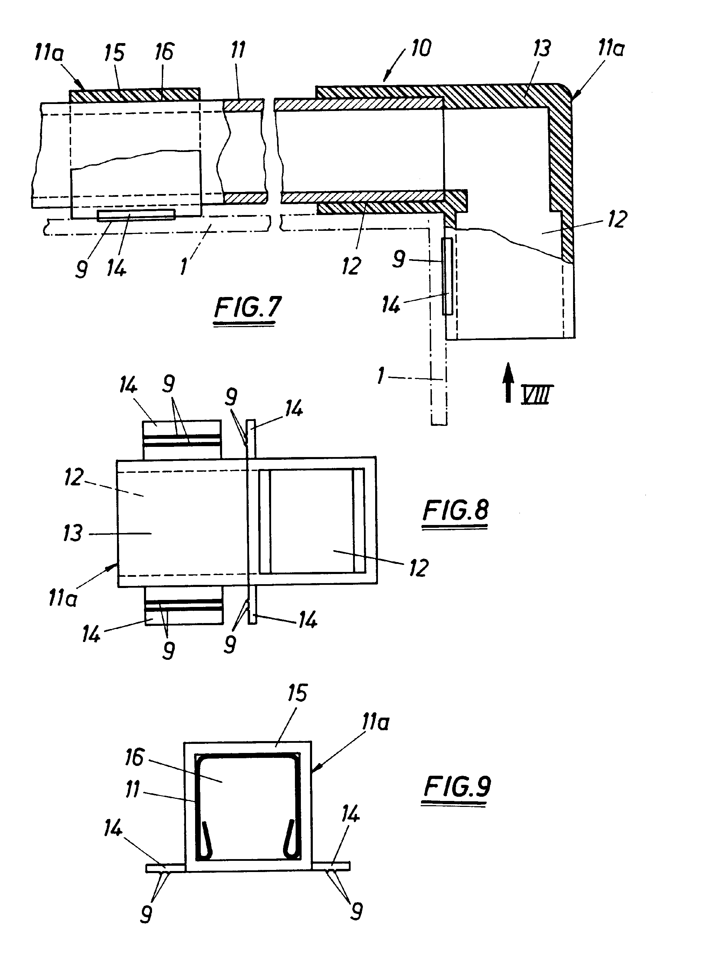

Zum Anbringen der Versteifungen 10 werden die Rahmenschenkel vom Metallprofil 11 abgeschnitten und die gegebenenfalls vorgesehenen Halter 15 aufgesteckt, bevor die Eckverbinder 13 aufgesetzt und diese Eckverbinder 13 sowie die Halter 15 mit den Kanalwänden 1 verschweißt werden. Aufgrund der in einfacher Weise an die jeweiligen Belastungsverhältnisse anpaßbaren Versteifungsrahmen kann eine einheitliche Dicke der Kanalwände von beispielsweise 6 mm vorgesehen sein. Als Rahmenschenkel können unterschiedliche Metallprofile 11 eingesetzt werden. Nach dem Ausführungsbeispiel der Fig. 7 bestehen die Rahmenschenkel aus einem Vierkantrohr. Das Ausführungsbeispiel nach der Fig. 9 zeigt einen Rahmenschenkel in Form eines U-förmig gekanteten Blechprofils.

## Patentansprüche

1. Lüftungskanal aus einzelnen über Stoßflansche (2) miteinander verbindbaren Kanalabschnitten mit rechteckigem Querschnitt, wobei die Stoßflansche (2) aus einem entsprechend der Seitenlänge der Kanalwände (1) abgelängten, winkelförmigen Kunststoffprofil (3) mit einem Flanschschenkel (4) und einem doppelwandigen Befestigungsschenkel (5) bestehen, der den stirnseitigen Rand der jeweiligen Kanalwand (1) zwischen den beiden Schenkelwänden (5a) aufnimmt und über diese Schenkelwände (5a) mit der ebenfalls aus Kunststoff bestehenden Kanalwand (1) verschweißt ist, dadurch gekennzeichnet, daß wenigstens eine der beiden Schenkelwände (5a) des Befestigungsschenkels (5) des Kunststoffprofils (3) für die Stoßflansche (2) auf der der Kanalwand (1) zugekehrten Innenseite wenigstens eine in Profillängsrichtung verlaufende Schweißrippe (9) aufweist und daß die Kanalabschnitte vorzugsweise Versteifungen (10) tragen, die aus Metallprofilen (11) und aus die Metallprofile (11) in Aufnahmeöffnungen (12, 16) aufnehmenden, mit den Kanalwänden (1) verschweißbaren Halterungen (11a) aus Kunststoff zusammengesetzt sind.

2. Lüftungskanal nach Anspruch 1, dadurch gekennzeichnet, daß einer der beiden Schenkelwände (5a) des Befestigungsschenkels (5) des Kunststoffprofils (3) für die Stoßflansche (2), vorzugsweise die äußere Schenkelwand (5a), wenigstens eine Schweißrippe (9) aufweist, während die andere Schwenkelwand (5a) vor der Schweißrippe (9) endet.

3. Lüftungskanal nach Anspruch 1 oder 2, dadurch gekennzeichnet, daß die Versteifung (10) für die Kanalabschnitte aus die Kanalabschnitte umschließenden Versteifungsrahmen besteht, die aus durch die Metallprofile (11) gebildeten Rahmenschenkeln und diese Rahmenschenkel in Einstecköffnungen (12) aufnehmenden, mit den Kanalwänden (1) verschweißbaren Eckverbindern (13) als Halterungen (11a) zusammengesetzt sind.

4. Lüftungskanal nach Anspruch 3, dadurch gekennzeichnet, daß zwischen den Eckverbindern (13) wenigstens ein mit der Kanalwand (1) verschweißbarer, eine Durchstecköffnung (16) für den Rahmenschenkel aufweisender, hülsenartiger Halter (15) aus Kunststoff vorgesehen ist.

5. Lüftungskanal nach einem der Ansprüche 1 bis 4, dadurch gekennzeichnet, daß das Kunststoffprofil (3) für die Stoßflansche (2) in seinem Flanschschenkel (4) wenigstens einen in Profillängsrichtung durchgehenden Hohlraum (6) zur Aufnahme einer Versteifung aufweist.

6. Lüftungskanal nach einem der Ansprüche 1 bis 5, dadurch gekennzeichnet, daß die abgelängten Kunststoffprofilstücke (3) jedes Stoßflansches (2) durch Eckverbinder (8) aus Kunststoff miteinander verschweißt sind, die in den Hohlraum bzw. die Hohlräume (6) des Flanschschenkels (4) des Kunststoffprofils (3) einführbare Steckansätze (7) aufweisen.

7. Lüftungskanal nach einem der Ansprüche 1 bis 6, dadurch gekennzeichnet, daß die Halterungen (11a) für die Metallprofile (11) der Versteifung (10) mit Anschlußflanschen (14) versehen sind, die auf der der Kanalwand (1) zugekehrten Seite wenigstens eine Schweißrippe (9) tragen.
